# EUROPEAN PATENT SPECIFICATION

(11) **EP 3 939 728 B1**
(45) Date of publication and mention of the grant of the patent: **04.03.2026**
(21) Application number: 21183859.4
(22) Date of filing: 06.07.2021
(51) Int. Cl.: B23D 47/02, B23D 59/00, B27B 5/065, B27B 31/08

(54) **MACHINE FOR SAWING PANELS PROVIDED WITH AN IMPROVED EXIT STATION**
MASCHINE ZUM SÄGEN VON PLATTEN MIT EINER VERBESSERTEN AUSGANGSSTATION
MACHINE DE SCIAGE DE PANNEAUX MUNIE D'UNE STATION DE SORTIE AMÉLIORÉE

(30) Priority: 13.07.2020 IT 202000016888
(43) Date of publication of application: 19.01.2022
(73) Proprietor: SCM Group S.p.A., 47921 Rimini (RN) (IT)
(72) Inventor: GIAVOLUCCI, Gianluca, 47921 RIMINI (IT)
(74) Representative: Tiburzi, Andrea

(56) References cited:
- EP-A1- 1 854 600
- WO-A1-2012/025632

## Description

### Machine for working workpieces provided with an improved exit station

The present invention relates to a machine for working workpieces provided with an improved exit station, in particular with moving planes.

More specifically, the invention relates to a machine of the above type, designed and manufactured in particular for the machining of pieces made of wood but also made of ceramic, glass, fiberglass, plastic, metal, and the like, in which the configuration of the exit station is adapted depending on the size of the workpiece at the exit, but which can be used in any station of the machine, where adaptation is necessary according to the size of the piece to be machined or machined.

In the following, the description will be directed to an invention concerning the adaptation of the exit configuration of a panel saw, according to the size of the workpiece.

As is well known, cutting machines for wooden pieces are currently used, in particular panel cutting machines, which comprise one or more working stations arranged in series to cut the panels in different directions.

The machined piece leaves the machine through an exit or unloading station, usually provided with a table, from which the machined panels are picked up by an operator or a mechanical arm.

The planes of the unloading stations of known cutting machines are usually stationary.

Unloading stations are also known, comprising a plurality of planes, usually three, spaced apart and movable, generally according to a direction transversal with respect to the sliding direction of the outgoing pieces.

However, the planes of the unloading stations of known machines have considerable drawbacks.

The most significant is due to the fall of the pieces exiting the unloading stations when the size of the machined pieces is such that the piece falls into the empty space between the planes.

Or, when the exiting piece has a larger size than the size of the support plane.

The relevant prior art also includes patent applications EP 1854600 A1 and WO 2012/025632 A1, each disclosing a machine according to the preamble of appended claim 1.

It is evident that these problems often cause damage or, in some cases, even the breakage of the machined piece leaving the machine.

In the light of the above, it is, therefore, an object of the present invention to provide a machine for machining wooden pieces comprising an unloading station that can be adapted to the size of the outgoing piece.

It is therefore specific object of the present invention a machine for sawing panels made of wood, plastic, glass, fiberglass, ceramic and metal, comprising a working table for supporting at least one panel on said working table, said working table comprising at least one longitudinal slot extending along a first axis, blocking means for blocking said at least one panel on said working table, during the working, a working station in which said at least one panel is cut according to a cutting scheme and along a cutting line parallel to said first axis, through said at least one longitudinal slot, an unloading station of said at least one worked panel, provided with a plurality of planes, each one being movable along said first axis, a logic control unit for controlling said machine, in which cutting schemes that said working station can carry out on said at least one panel are stored, in said logic control unit configurations of said plurality of planes are stored, corresponding to each stored cutting scheme, each plane of said plurality of planes is provided with a sensor capable of detecting the position of the respective plane along said cutting line and of sending a corresponding numerical position value to said logic control unit, said logic control unit being configured for carrying out a comparison between said stored configurations of said planes and said received numerical position values and for sending signals corresponding to said comparison for moving at least one plane of said plurality of planes.

Further according to the invention, said machine may comprise displaying means capable of receiving said signals sent by said logic control unit and of showing indications for the manual movement of at least one plane of said plurality of planes, so as to reproduce the configuration of said plurality of planes, associated with the cutting scheme carried out in said working station.

Preferably according to the invention, each plane of said plurality of planes may comprise means for receiving said signals sent by said logic control unit of visual type, acoustic or tactile, so as to provide a feedback to a user.

Still according to the invention, said machine may comprise movement means of said plurality of planes capable of receiving said signals from said logic control unit and of moving at least one plane of said plurality of planes, so as to reproduce the configuration of said plurality of planes, associated with the cutting scheme carried out in said working station.

Always according to the invention, said machine may comprise at least one reference means arranged close to said cutting line, as a metric line or a binary code with longitudinal development along said first axis, or a QR-code so that said sensors are capable of identifying the position of the respective plane of said plurality of planes on which they are installed, along said cutting line.

Further according to the invention, said sensors may be of an optical type or encoder.

Preferably according to the invention, said working station may comprise a carriage capable of supporting a cutting member, rotatable around a third rotation axis, capable of crossing said at least one longitudinal slot carrying out a cutting operation in said at least one panel.

Still according to the invention, said sensors may comprise a first receiving and transmitting module of wireless type, capable of exchanging data with a second reception and transmission module of wireless type of said logic control unit.

Always according to the invention, said logic control unit may be connectable to at least one mobile electronic device and/or to a server cloud, for sending said signals corresponding to said comparison for carrying out the movement of at least one plane of said plurality of planes.

Further according to the invention, said logic control unit may be configured for sending operation data of said machine to said server cloud and said server cloud is configured for sending said operation data to said at least one mobile electronic device.

Preferably according to the invention, said logic control unit may be capable of emitting a signal corresponding to the position of each plane of said plurality of planes with respect to the configuration that each plane should respect according to the selected cutting scheme.

Still, according to the invention, the working of said panel may be operated in correspondence of the configuration of each plane in the predefined position corresponding to the selected cutting scheme.

The present invention will be now described, for illustrative but not limitative purposes, according to its preferred embodiments, with particular reference to the figures of the enclosed drawings, wherein:
figure 1 shows a top view of a machine for machining parts provided with an improved exit station, object of the present invention;
figure 2 shows a rear perspective view of the exit station of the machine of figure 1, in a rest position of an operating unit; and
figure 3 shows a rear perspective view of the exit station of the machine of figure 1, in a working position of an operating unit.

In the various figures, similar parts will be indicated with the same numerical references.

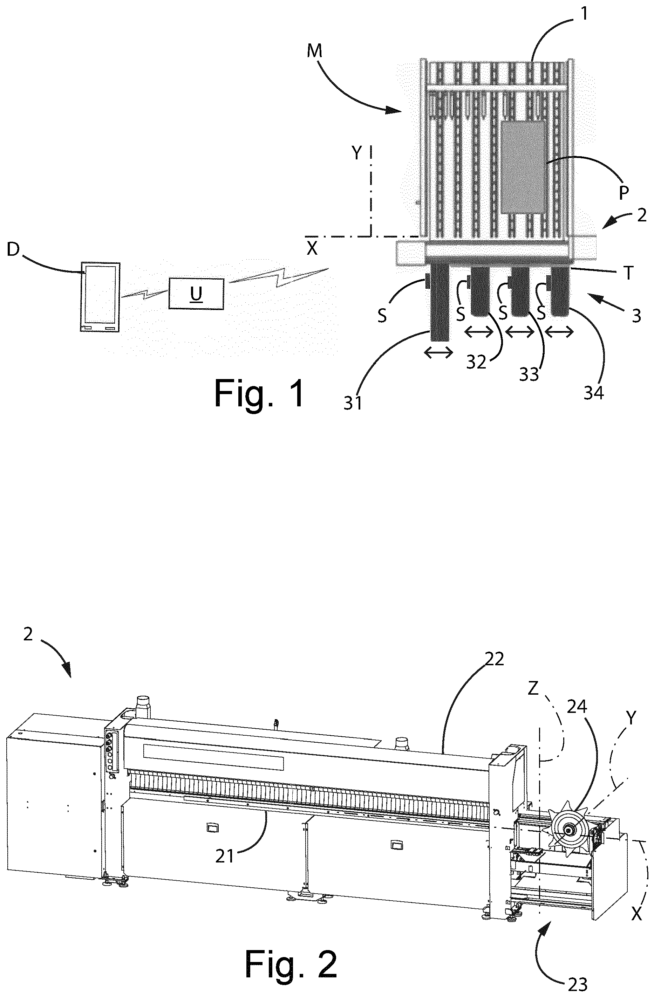

With reference to figure 1, a machine M is described for machining pieces in wood, ceramic, glass, fiberglass, plastic, metal, and the like, provided with an improved exit station.

In the following description, reference will be made to a cutting machine M and to pieces, which are wooden panels P.

The machine M essentially comprises an input or loading station 1 of the panel P, at least one working station 2 for carrying out a respective machining on one or more panels P, an output or unloading station 3, and a logic control unit U.

The panels P to be worked are arranged on a support plane of said at least one loading station 1, and advance on said support plane along an advancement longitudinal direction, with respect to the support plane, parallel to a third axis Y, until reaching the working station 2, by means of a thrust exerted by one or more pusher units, each of which can comprise one or more gripping and thrusting elements, such as for example pliers for gripping and moving the panel P to be machined.

The panels P machined by the working station 2 of the machine M reach a support surface of an unloading station 3, and are picked up by an operator or by a mechanical arm.

In particular, in the embodiment described, said cutting machine M comprises a loading station 1 and a working station 2, arranged at one end of said loading station 1, provided with a plane, on which the panels P are arranged to be machined, and an unloading station 3, arranged downstream of said working station 2.

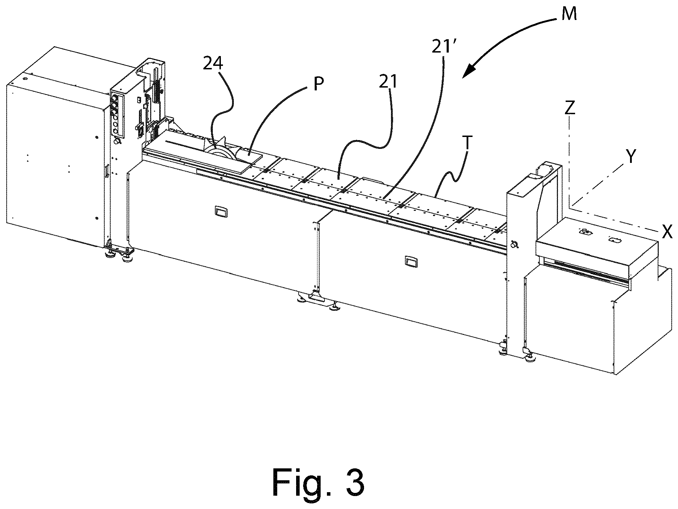

With reference to figures 2 and 3, said working station 2 comprises a working table 21, to allow the support of at least one panel P to be machined, which extends along a first axis X.

In the same working table 21 there is a longitudinal slot 21', which extends along said first axis X.

Above said working table 21 there is a blocking means such as a pressing member 22, which extends along said first X-axis and is movable along a second Z-axis, vertical and orthogonal with respect to said first X-axis, between a rest raised position and a lowered working position, in such a way as to allow the blocking of the panel P to be worked between said working table 21 and the same pressing member 22.

Said machine M comprises a carriage 23 movable along said first axis X, in a longitudinal chamber formed under said working table 21.

In said machine M movement means are also provided for moving said carriage 23 along said first axis X, in both directions.

Mounted on said carriage 23 is a cutting member, such as a circular blade 24, for cutting said panels P to be machined arranged on said working table 21.

In said circular blade 24 there is a plurality of cutting teeth formed on the outer circumference of the circular blade 24 itself.

Said circular blade 24 lies on a plane XZ defined by said first X-axis and said second Z-axis, and in such a way as to be able to pass through said longitudinal slot 21', protruding from said working plane 21 for a given portion, so as to cut the panel P along a cutting line T parallel to said first X-axis.

Said circular blade 24 is also rotatable about a rotation axis orthogonal to the aforementioned XZ plane, and therefore parallel to said third Y-axis, orthogonal to said first X and second Z-axis.

Specific handling means are also provided in said carriage 23 to rotate said circular blade 24 around its rotation axis.

Referring now again to figure 1, said unloading station 3 comprises a plurality of planes, aligned with each other, extending along said third Y axis, therefore parallel to the advancement direction of the panel P in the machine M, and spaced apart.

Said planes are defined as "air veil", as they have through holes on their surface, for the passage of air, which tends to support the panel P exiting the working station 2, thus reducing the friction of support of the panel P on the plane.

In particular, in this embodiment, the planes are four, and in particular a first plane 31, a second plane 32, a third plane 33 and a fourth plane 34.

Each of said planes 31-34 is capable of translating, or oscillating longitudinally around its position, along said first axis X.

The movement of each plane 31-34 can take place manually, by an operator, or automatically by means of movement means not shown in the figure.

Each of said planes 31-34 is provided with at least one sensor S, capable of detecting the position of the plane, on which it is installed, along a direction parallel to said cutting line T, and of sending a numerical position value corresponding to said logic unit control U.

In particular, said sensors S are optical sensors or encoders.

A known type of reference means, not shown in the figure, such as a metric line or a binary code with longitudinal development along said first axis X, or a QR-code is arranged close to said cutting line T, so that said sensors S are able to identify the position of the respective plane 31-34, on which it is installed, along said cutting line T.

Said sensors S can be provided with a receiving and transmitting module in a wireless mode to communicate with a receiving and transmitting module installed in said logic control unit U.

Said logic control unit U keeps in memory the cutting schemes to be performed on each panel P and the arrangements that said planes 31-34 must assume in correspondence with said cutting schemes.

In this way, for each panel P entering said loading station 1, the cutting scheme that said working station 2 must perform on said panel P is selected.

Consequently, said planes 31-34 are arranged along said cutting line T to occupy positions corresponding to the size of the machined output panel P, thus avoiding the fall between the separation spaces between the planes 31-34.

In particular, each plane 31-34 also comprises display means for providing visual information to the operator on their correct displacement.

Each plane 31-34 can also comprise means for checking the operator, which can also be of the visual, acoustic or tactile type, such as for example a vibrating means.

Said visual, acoustic, or tactile means receive the signals sent by said logic control unit U and provide feedback to the operator of the visual, acoustic or tactile type, in order to be able to move the single plane 31-34, in case of manual operation.

For example, said visual means can be LEDs, which flash during the movement of the single plane 31-34, whose light increases the visual intensity when the plane 31-34 reaches the correct position, and then becomes a fixed light when the planes 31-34 is in the correct position.

Or, said visual means can also change color in passing from an initial position to the correct position.

By correct position it is meant the position that each plane 31-34 must occupy, corresponding to the cutting scheme selected to perform the machining of panel P.

For example, said vibrating means can vibrate when the plane 31-34 reaches the correct position and can also be wearable devices.

In case of automatic actuation, said means for moving said planes 31-34 are able to receive the signals sent by said logic control unit U, and to move the planes 31-34, to reproduce the arrangement corresponding to the cutting scheme performed by said working station 2.

Also said logic control unit U comprises a module for receiving and transmitting in wireless mode.

Said logic control unit U sends signals corresponding to the position assumed by each plane of said plurality of planes 31, 32, 33, 34.

In particular, if one or more planes of said plurality of planes 31, 32, 33, 34 is in a different position from the arrangement that this have to assume, in correspondence with the selected cutting scheme, said logic control unit U sends a signal of "Incorrect position".

Furthermore, if said planes 31-34 do not occupy the correct arrangement corresponding to the selected cutting scheme, the operation of said machine M is not started, in this case, said logic control unit U sends an incorrect positioning signal.

Said machine can comprise or be connectable to mobile electronic devices D and/or a cloud infrastructure, such as a server.

By mobile electronic device it is meant any electronic device D, such as for example a smartphone, a tablet, a laptop or the like.

Therefore, said logic control unit U can be configured to send operating data of said machine M to said mobile electronic device D.

Furthermore, said logic control unit U can be configured to send said operating data of said machine M also to a cloud server, and the latter can be configured to send said data to said mobile electronic devices D.

The operation of the machine for machining pieces provided with an improved exit station described above is as follows.

When it is necessary to perform a machining on at least one wooden panel P, it is first of all necessary arranging the panel P to be machined on said working table 21, above said longitudinal slot 21', abutting with appropriate abutment elements provided on said working table 21 itself, and subsequently actuate said pressing member 22, bringing it to the respective lowered position, to block the panel P to be worked between the pressing member 22 and the underlying working table 21.

Once the panel P is blocked in position and the rotation of said circular blade 24 activated, the mobile carriage 23 moves from the relative rest position shown in figure 2, to the operating position shown in figure 3, thus allowing cutting, or rather the sectioning of the panel P by the circular blade 24, according to the cutting scheme stored in said logic control unit U and selected.

Once the cut has been made on the panel P, it is moved towards the unloading station 3.

Each sensor S detects the position of the respective plane 31-34 on which it is installed, along a direction parallel to said cutting line T, and sends the numerical position value corresponding to said logic control unit U.

Said logic control unit U compares the current position of each plane 31-34 with respect to the memorized position associated with the cutting scheme performed by said machining station 2, and sends signals corresponding to said display means concerning the correct positioning or not of the planes 31-34, so that the operator can move each plane 31-34 to the position corresponding to the cutting scheme performed.

If the actuation of said planes 31-34 is automatic, said logic control unit U commands the displacement of each plane 31-34 by means of said movement means, not shown in the figure, corresponding to the cutting scheme performed, so that the distance between each plane 31-34 from the consecutive and from the previous one is adapted to the size of the machined panel P.

As is clear from the above description, the machine for machining pieces provided with an improved exit station object of the present invention allows the exact manual or automatic positioning of all the planes of the unloading station, corresponding to the cutting scheme performed on the panel P, so as to avoid unintended falls of said machined panels P, leaving the machine itself.

The present invention has been described for illustrative but not limitative purposes, according to its preferred embodiments, but it is to be understood that modifications and/or changes can be introduced by those skilled in the art without departing from the scope as defined in the enclosed claims.

## Claims

1. Machine (M) for sawing panels (P) made of wood, plastic, glass, fiberglass, ceramic and metal, comprising:
a working table (21) for supporting at least one panel (P) on said working table (21), said working table (21) comprising at least one longitudinal slot (21') extending along a first axis (X);
blocking means (22) for blocking said at least one panel (P) on said working table (21), during the working;
a working station (2) in which said at least one panel (P) is cut according to a cutting scheme and along a cutting line (T) parallel to said first axis (X), through said at least one longitudinal slot (21');
an unloading station (3) of said at least one worked panel (P), provided with a plurality of planes (31, 32, 33, 34), each one being movable along said first axis (X);
a logic control unit (U) for controlling said machine (M), in which cutting schemes that said working station (2) can carry out on said at least one panel (P) are stored, said machine (M) being **characterized**
**in that** in said logic control unit (U) configurations of said plurality of planes (31, 32, 33, 34) are stored, corresponding to each stored cutting scheme,
**in that** each plane of said plurality of planes (31, 32, 33, 34) is provided with a sensor (S) capable of detecting the position of the respective plane (31, 32, 33, 34) along said cutting line (T) and of sending a corresponding numerical position value to said logic control unit (U);
**in that** said logic control unit (U) is configured for carrying out a comparison between said stored configurations of said planes (31, 32, 33,34) and said received numerical position values and for sending signals corresponding to said comparison for moving at least one plane of said plurality of planes (31, 32, 33, 34).

2. Machine (M) according to the preceding claim, **characterized in that** it comprises displaying means capable of receiving said signals sent by said logic control unit (U) and of showing indications for the manual movement of at least one plane of said plurality of planes (31, 32, 33, 34), so as to reproduce the configuration of said plurality of planes (31, 32, 33, 34), associated with the cutting scheme carried out in said working station (2).

3. Machine (M) according to any one of the preceding claims, **characterized in that** each plane of said plurality of planes (31, 32, 33, 34) comprises means for receiving said signals sent by said logic control unit (U) of visual type, acoustic or tactile, so as to provide a feedback to a user.

4. Machine (M) according to claim 1, **characterized in that** it comprises movement means of said plurality of planes (31, 32, 33, 34) capable of receiving said signals from said logic control unit (U) and of moving at least one plane of said plurality of planes (31, 32, 33, 34), so as to reproduce the configuration of said plurality of planes (31, 32, 33, 34), associated with the cutting scheme carried out in said working station (2).

5. Machine (M) according to any one of the preceding claims, **characterized in that** it comprises at least one reference means arranged close to said cutting line (T), as a metric line or a binary code with longitudinal development along said first axis (X), or a QR-code so that said sensors (S) are capable of identifying the position of the respective plane of said plurality of planes (31, 32, 33, 34) on which they are installed, along said cutting line (T).

6. Machine (M) according to any one of the preceding claims, **characterized in that** said sensors (S) are of optical type or encoder.

7. Machine (M) according to any one of the preceding claims, **characterized in that** said working station (2) comprises a carriage (23) capable of supporting a cutting member (24), rotatable around a third rotation axis (Y), capable of crossing said at least one longitudinal slot (21') carrying out a cutting operation in said at least one panel (P).

8. Machine (M) according to any one of the preceding claims, **characterized in that** said sensors (S) comprise a first receiving and transmitting module of wireless type, capable of exchanging data with a second reception and transmission module of wireless type of said logic control unit (U).

9. Machine (M) according to the preceding claim, **characterized in that** said logic control unit (U) is connectable to at least one mobile electronic device (D) and/or to a server cloud, for sending said signals corresponding to said comparison for carrying out the movement of at least one plane of said plurality of planes (31, 32, 33, 34).

10. Machine (M) according to the preceding claim, **characterized in that** said logic control unit (U) is configured for sending operation data of said machine (M) to said server cloud, and
**in that** said server cloud is configured for sending said operation data to said at least one mobile electronic device (D).

11. Machine (M) according to any one of the preceding claims, **characterized in that** said logic control unit (U) is capable of emitting a signal corresponding to the position of each plane of said plurality of planes (31, 32, 33, 34) with respect to the configuration that each plane should respect according to the selected cutting scheme.

12. Machine (M) according to any one of the preceding claims, **characterized in that** the working of said panel (P) is operated in correspondence of the configuration of each plane (31-34) in the predefined position corresponding to the selected cutting scheme.

## Patentansprüche

1. Maschine (M) zum Sägen von Platten (P) aus Holz, Kunststoff, Glas, Glasfaser, Keramik und Metall, umfassend:
einen Arbeitstisch (21) zum Tragen mindestens einer Platte (P) auf dem Arbeitstisch (21), wobei der Arbeitstisch (21) mindestens einen Längsschlitz (21') aufweist, der sich entlang einer ersten Achse (X) erstreckt;
Blockiermittel (22) zum Blockieren der mindestens einen Platte (P) auf dem Arbeitstisch (21) während der Bearbeitung;
eine Bearbeitungsstation (2), in der die mindestens eine Platte (P) nach einem Schneideschema und entlang einer zur ersten Achse (X) parallelen Schnittlinie (T) durch den mindestens einen Längsschlitz (21') geschnitten wird;
eine Entladestation (3) der mindestens einen bearbeiteten Platte (P), die mit einer Vielzahl von Ebenen (31, 32, 33, 34) versehen ist, von denen jede entlang der ersten Achse (X) beweglich ist;
eine logische Steuereinheit (U) zur Steuerung der Maschine (M), in der Schneideschemata gespeichert sind, die die Bearbeitungsstation (2) an der mindestens einen Platte (P) ausführen kann, wobei die Maschine (M) **dadurch gekennzeichnet ist, dass** dass in der logischen Steuereinheit (U) Konfigurationen der mehreren Ebenen (31, 32, 33, 34) gespeichert sind, die jedem gespeicherten Schneideschema entsprechen,
dass jede Ebene der Vielzahl von Ebenen (31, 32, 33, 34) mit einem Sensor (S) versehen ist, der in der Lage ist, die Position der jeweiligen Ebene (31, 32, 33, 34) entlang der Schnittlinie (T) zu erfassen und einen entsprechenden numerischen Positionswert an die logische Steuereinheit (U) zu senden;
dass die logische Steuereinheit (U) so konfiguriert ist, dass sie einen Vergleich zwischen den gespeicherten Konfigurationen der Ebenen (31, 32, 33, 34) und den empfangenen numerischen Positionswerten durchführt und dem Vergleich entsprechende Signale sendet, um mindestens eine Ebene der Vielzahl von Ebenen (31, 32, 33, 34) zu bewegen.

2. Maschine (M) nach dem vorhergehenden Anspruch, **dadurch gekennzeichnet, dass** sie Anzeigemittel umfasst, die in der Lage sind, die von der logischen Steuereinheit (U) gesendeten Signale zu empfangen und Anzeigen für die manuelle Bewegung mindestens einer Ebene der Vielzahl von Ebenen (31, 32, 33, 34) anzuzeigen, um die Konfiguration der Vielzahl von Ebenen (31, 32, 33, 34) zu reproduzieren, die mit dem in der Bearbeitungsstation (2) ausgeführten Schneideschema verbunden ist.

3. Maschine (M) nach einem der vorhergehenden Ansprüche, **dadurch gekennzeichnet, dass** jede Ebene der mehreren Ebenen (31, 32, 33, 34) Mittel zum Empfangen der von der logischen Steuereinheit (U) gesendeten Signale visueller, akustischer oder taktiler Art umfasst, um eine Rückmeldung an einen Benutzer zu geben.

4. Maschine (M) nach Anspruch 1, **dadurch gekennzeichnet, dass** sie Mittel zum Bewegen der mehreren Ebenen (31, 32, 33, 34) umfasst, die in der Lage sind, die Signale von der logischen Steuereinheit (U) zu empfangen und mindestens eine Ebene der mehreren Ebenen (31, 32, 33, 34) zu bewegen, um die Konfiguration der mehreren Ebenen (31, 32, 33, 34) zu reproduzieren, die mit dem in der Bearbeitungsstation (2) ausgeführten Schneideschema verbunden ist.

5. Maschine (M) nach einem der vorstehenden Ansprüche, **dadurch gekennzeichnet, dass** sie mindestens ein Referenzmittel umfasst, das
in der Nähe der Schnittlinie (T) als metrische Linie oder als Binärcode mit Längsentwicklung entlang der ersten Achse (X) oder als QR-Code, so dass die Sensoren (S) in der Lage sind, die Position der jeweiligen Ebene der mehreren Ebenen (31, 32, 33, 34), auf denen sie installiert sind, entlang der Schnittlinie (T) zu identifizieren.

6. Maschine (M) nach einem der vorstehenden Ansprüche, **dadurch gekennzeichnet, dass** die Sensoren (S) vom optischen Typ oder vom Typ eines Encoders sind.

7. Maschine (M) nach einem der vorhergehenden Ansprüche, **dadurch gekennzeichnet, dass** die Arbeitsstation (2) einen Schlitten (23) umfasst, der in der Lage ist, ein Schneidelement (24) zu tragen, das um eine dritte Drehachse (Y) drehbar ist und in der Lage ist, den mindestens einen Längsschlitz (21') zu durchqueren und einen Schneidvorgang in der mindestens einen Platte (P) auszuführen.

8. Maschine (M) nach einem der vorhergehenden Ansprüche, **dadurch gekennzeichnet, dass** die genannten Sensoren (S) ein erstes drahtloses Empfangs- und Sendemodul umfassen, das in der Lage ist, Daten mit einem zweiten drahtlosen Empfangs- und Sendemodul der genannten logischen Steuereinheit (U) auszutauschen.

9. Maschine (M) nach dem vorhergehenden Anspruch, **dadurch gekennzeichnet, dass** die logische Steuereinheit (U) mit mindestens einem mobilen elektronischen Gerät (D) und/oder mit einer Server-Cloud verbunden werden kann, um die Signale zu senden, die dem Vergleich entsprechen, um die Bewegung mindestens einer Ebene der mehreren Ebenen (31, 32, 33, 34) auszuführen.

10. Maschine (M) nach dem vorstehenden Anspruch, **dadurch gekennzeichnet, dass**
dadurch, dass die logische Steuereinheit (U) so konfiguriert ist, dass sie Betriebsdaten der Maschine (M) an die Server-Cloud sendet, und
dadurch, dass die Serverwolke so konfiguriert ist, dass sie die Betriebsdaten an das mindestens eine mobile elektronische Gerät (D) sendet.

11. Maschine (M) nach einem der vorangehenden Ansprüche, **dadurch gekennzeichnet, dass** die logische Steuereinheit (U) in der Lage ist, ein Signal auszugeben, das der Position jeder Ebene der mehreren Ebenen (31, 32, 33, 34) in Bezug auf die Konfiguration entspricht, die jede Ebene gemäß dem gewählten Schneideschema einhalten sollte.

12. Maschine (M) nach einem der vorhergehenden Ansprüche, **dadurch gekennzeichnet, dass** die Bearbeitung der Platte (P) in Übereinstimmung mit der Konfiguration jeder Ebene (31-34) in der vordefinierten Position entsprechend dem gewählten Schneideschema durchgeführt wird.

## Revendications

1. Machine (M) pour scier des panneaux (P) en bois, plastique, verre, fibre de verre, céramique et métal, comprenant:
une table de travail (21) pour supporter au moins un panneau (P) sur ladite table de travail (21), ladite table de travail (21) comprenant au moins une fente longitudinale (21') s'étendant le long d'un premier axe (X);
des moyens de blocage (22) pour bloquer ledit au moins un panneau (P) sur ladite table de travail (21), pendant le travail;
un poste de travail (2) dans lequel ledit au moins un panneau (P) est découpé selon un plan de coupe et le long d'une ligne de coupe (T) parallèle audit premier axe (X), à travers ladite au moins une fente longitudinale (21');
un poste de déchargement (3) dudit au moins un panneau travaillé (P), pourvu de plusieurs plans (31, 32, 33, 34), chacun étant mobile le long dudit premier axe (X) ; une unité de commande logique (U) pour contrôler ladite machine (M), dans laquelle sont stockés les schémas de coupe que ledit poste de travail (2) peut effectuer sur ledit au moins un panneau (P), ladite machine (M) étant **caractérisée par**
en ce sens que dans ladite unité de commande logique (U), les configurations de ladite pluralité de plans (31, 32, 33, 34) sont stockées, correspondant à chaque schéma de coupe stocké,
en ce sens que chaque plan de ladite pluralité de plans (31, 32, 33, 34) est doté d'un capteur (S) capable de détecter la position du plan respectif (31, 32, 33, 34) le long de ladite ligne de coupe (T) et d'envoyer une valeur numérique de position correspondante à ladite unité de commande logique (U);
en ce que ladite unité de commande logique (U) est configurée pour effectuer une comparaison entre lesdites configurations mémorisées desdits plans (31, 32, 33, 34) et lesdites valeurs de position numérique reçues et pour envoyer des signaux correspondant à ladite comparaison pour déplacer au moins un plan de ladite pluralité de plans (31, 32, 33, 34).

2. Machine (M) selon la revendication précédente, **caractérisée en ce qu'**elle comprend des moyens d'affichage capables de recevoir lesdits signaux envoyés par ladite unité de commande logique (U) et de montrer des indications pour le déplacement manuel d'au moins un plan de ladite pluralité de plans (31, 32, 33, 34), de manière à reproduire la configuration de ladite pluralité de plans (31, 32, 33, 34), associée au schéma de coupe réalisé dans ladite station de travail (2).

3. Machine (M) selon l'une quelconque des revendications précédentes, **caractérisée en ce que** chaque plan de ladite pluralité de plans (31, 32, 33, 34) comporte des moyens de réception desdits signaux envoyés par ladite unité de commande logique (U) de type visuel, acoustique ou tactile, afin de fournir un retour d'information à un utilisateur.

4. Machine (M) selon la revendication 1, **caractérisée en ce qu'**elle comprend des moyens de déplacement de ladite pluralité de plans (31, 32, 33, 34) capables de recevoir lesdits signaux de ladite unité de commande logique (U) et de déplacer au moins un plan de ladite pluralité de plans (31, 32, 33, 34), de manière à reproduire la configuration de ladite pluralité de plans (31, 32, 33, 34), associée au schéma de coupe réalisé dans ladite station de travail (2).

5. Machine (M) selon l'une quelconque des revendications précédentes,
**caractérisée en ce qu'**elle comprend au moins un moyen de référence disposé
à proximité de ladite ligne de coupe (T), sous la forme d'une ligne métrique ou d'un code binaire à développement longitudinal le long dudit premier axe (X), ou d'un code QR, de sorte que lesdits capteurs (S) soient capables d'identifier la position du plan respectif de ladite pluralité de plans (31, 32, 33, 34) sur lesquels ils sont installés, le long de ladite ligne de coupe (T).

6. Machine (M) selon l'une quelconque des revendications précédentes, **caractérisée en ce que** lesdits capteurs (S) sont de type optique ou codeur.

7. Machine (M) selon l'une quelconque des revendications précédentes, **caractérisée en ce que** ledit poste de travail (2) comprend un chariot (23) apte à supporter un organe de coupe (24), rotatif autour d'un troisième axe de rotation (Y), apte à traverser ladite au moins une fente longitudinale (21') réalisant une opération de coupe dans ledit au moins un panneau (P).

8. Machine (M) selon l'une quelconque des revendications précédentes, **caractérisée en ce que** lesdits capteurs (S) comportent un premier module de réception et de transmission de type sans fil, capable d'échanger des données avec un second module de réception et de transmission de type sans fil de ladite unité de commande logique (U).

9. Machine (M) selon la revendication précédente, **caractérisée en ce que** ladite unité de commande logique (U) est connectable à au moins un dispositif électronique mobile (D) et/ou à un nuage de serveurs, pour envoyer lesdits signaux correspondant à ladite comparaison pour effectuer le mouvement d'au moins un plan de ladite pluralité de plans (31, 32, 33, 34).

10. Machine (M) selon la revendication précédente, **caractérisée**
**en ce que** ladite unité de commande logique (U) est configurée pour envoyer des données de fonctionnement de ladite machine (M) audit nuage de serveurs, et
en ce sens que ledit nuage de serveurs est configuré pour envoyer lesdites données d'exploitation audit au moins un dispositif électronique mobile (D).

11. Machine (M) selon l'une quelconque des revendications précédentes, **caractérisée en ce que** ladite unité logique de commande (U) est capable d'émettre un signal correspondant à la position de chaque plan de ladite pluralité de plans (31, 32, 33, 34) par rapport à la configuration que chaque plan doit respecter selon le schéma de coupe sélectionné.

12. Machine (M) selon l'une quelconque des revendications précédentes, **caractérisée en ce que** le travail dudit panneau (P) est opéré en fonction de la configuration de chaque plan (31-34) dans la position prédéfinie correspondant au schéma de coupe sélectionné.
